# EUROPEAN PATENT APPLICATION

(11) **EP 4 589 418 A1**
(43) Date of publication of application: **23.07.2025**
(21) Application number: 23864309.2
(22) Date of filing: 29.03.2023
(51) Int. Cl.: G06F 3/16, G06F 3/01, G10L 15/22

(54) **IN-VEHICLE INTERACTION METHOD AND SYSTEM, CONTROLLER, AND VEHICLE**

(30) Priority: 15.09.2022 CN 202211127032
(71) Applicant: BYD Company Limited, Shenzhen, Guangdong 518118 (CN)
(72) Inventor: ZHANG, Quanhui, Shenzhen, Guangdong 518118 (CN); LUO, Hua, Shenzhen, Guangdong 518118 (CN); LING, Yunjian, Shenzhen, Guangdong 518118 (CN); ZHANG, Yuexia, Shenzhen, Guangdong 518118 (CN); WU, Panpan, Shenzhen, Guangdong 518118 (CN)
(74) Representative: Mathys & Squire
(86) International application number: PCT/CN2023/084779
(87) International publication number: WO 2024/055566

(57) **Abstract**

An in-vehicle interaction method and system, a controller, and a vehicle, relating to the field of human-machine interaction. The method is applied to an in-vehicle terminal. The method comprises: responding to the input of a first voice of a user, and determining orientation information of a sound source of the first voice relative to an in-vehicle space (S101); according to the orientation information, determining a target display position of a voice container (11) responding to the first voice in the in-vehicle terminal (S102); and displaying the voice container (11) on a display screen (1) according to the target display position (S103).

## Description

### CROSS-REFERENCE TO RELATED APPLICATIONS

This application claims priority to Chinese Patent Application No. 202211127032.9, filed on September 15, 2022 and entitled "IN-VEHICLE INTERACTION METHOD AND SYSTEM, CONTROLLER, AND VEHICLE". The entire content of the above-referenced application is incorporated herein by reference.

### FIELD

The present disclosure relates to the field of human-machine interaction, and in particular, to an in-vehicle interaction method and system, a controller, and a vehicle.

### BACKGROUND

Currently, when a user interacts with an in-vehicle terminal by voice based on a voice interaction function in a smart cabin of a vehicle, a voice interaction interface is displayed at a preset fixed position. Therefore, the user cannot obtain a good visual and interactive experience.

### SUMMARY

The present disclosure provides an in-vehicle interaction method and system. Orientation information of a user in a vehicle is determined by sound source localization, a target display position of a voice interaction interface on a display screen is determined through the orientation information, and the voice interaction interface is displayed according to the target display position, thereby solving the problem that the voice interaction interface is displayed only at a preset fixed position. When different users interact with an in-vehicle terminal by voice, the voice interaction interface can be displayed at different positions of a screen, thereby improving the visual experience and interactive experience of the users, and improving the interactive efficiency.

In order to solve the above technical problems, according to a first aspect of the present disclosure, an in-vehicle interaction method is disclosed. The method is applied to an in-vehicle terminal. The method includes:
responding to the input of a first voice of a user, orientation information of a sound source of the first voice relative to an in-vehicle space is determined;
a target display position of a voice container responding to the first voice in the in-vehicle terminal is determined according to the orientation information; and
the voice container is displayed on a display screen according to the target display position.

According to a second aspect of the present disclosure, an in-vehicle interaction system is disclosed. The system is applied to an in-vehicle terminal. The system includes:
a first determination module, configured to respond to receiving the input of a first voice of a user, and determine orientation information of a sound source of the first voice relative to an in-vehicle space;
a second determination module, configured to determine, according to the orientation information, a target display position of a voice container responding to the first voice in the in-vehicle terminal; and
a display module, configured to display the voice container on a display screen according to the target display position.

According to a third aspect of the present disclosure, a controller is disclosed. The controller is configured to perform part or all of the steps in the in-vehicle interaction method disclosed according to the first aspect of the present disclosure.

According to a fourth aspect of the present disclosure, a computer storage medium is disclosed. The computer storage medium stores computer instructions that, when called, are configured for performing part or all of the steps in the in-vehicle interaction method disclosed according to the first aspect of the present disclosure.

According to a fifth aspect of the present disclosure, a vehicle is disclosed. The vehicle includes the in-vehicle interaction system disclosed according to the second aspect of the present disclosure or the controller disclosed according to the third aspect of the present disclosure.

Compared with the related art, the present disclosure has the following beneficial effects:
The present disclosure discloses an in-vehicle interaction method and system. The method includes: responding to the input of a first voice of a user, and determining orientation information of a sound source of the first voice relative to an in-vehicle space; according to the orientation information, determining a target display position of a voice container responding to the first voice in the in-vehicle terminal; and displaying the voice container on a display screen according to the target display position. As can be seen from the present disclosure, orientation information of a user in a vehicle is determined by sound source localization, a target display position of a voice interaction interface on a display screen is determined through the orientation information, and the voice interaction interface is displayed according to the target display position. When different users interact with an in-vehicle terminal by voice, the voice interaction interface can be displayed at different positions of a screen, thereby improving the visual experience and interactive experience of the users, and improving the interactive efficiency.

### BRIEF DESCRIPTION OF THE DRAWINGS

In order to more clearly explain the technical solutions in the examples of the present disclosure, the accompanying drawings that need to be used in the description of the examples will be briefly introduced below. It is obvious that the accompanying drawings in the following description are only some examples of the present disclosure. For those of ordinary skill in the art, other accompanying drawings may be obtained from these accompanying drawings without making creative labor.
FIG. 1 is a flowchart of an in-vehicle interaction method according to an example of the present disclosure;
FIG. 2 is another flowchart of an in-vehicle interaction method according to an example of the present disclosure;
FIG. 3 is a schematic diagram of a voice container being displayed according to an example of the present disclosure;
FIG. 4 is a schematic diagram of a voice container being displayed at the time of waking up by a driver and by a front passenger according to an example of the present disclosure;
FIG. 5 is a schematic diagram of sound zones in a vehicle according to an example of the present disclosure;
FIG. 6 is a schematic diagram of a voice container being displayed differently in response to sound sources at different positions in a vehicle according to an example of the present disclosure;
FIG. 7 is a schematic diagram of a voice state assembly being displayed in different voice interaction states according to an example of the present disclosure;
FIG. 8 is a schematic diagram of a voice state assembly being displayed permanently on a display screen according to an example of the present disclosure;
FIG. 9 is a schematic diagram of a voice container being displayed in response to voice under a third-party application according to an example of the present disclosure; and
FIG. 10 is a schematic structural diagram of an in-vehicle interaction system according to an example of the present disclosure.

### DETAILED DESCRIPTION

In order to enable those skilled in the art to better understand the solutions of the present disclosure, the technical solutions in the examples of the present disclosure will be clearly and completely described below with reference to the accompanying drawings in the examples of the present disclosure. It is obvious that the described examples are only a part of the examples of the present disclosure, but not all of the examples. Based on the examples in the present disclosure, all other examples obtained by those of ordinary skill in the art without creative work fall within the scope of protection of the present disclosure.

The terms "first", "second", and the like in the specification and claims of the present disclosure and the above drawings are configured for distinguishing different objects, and not describing a specific order. Furthermore, the terms "include" and "have" and any variations thereof are intended to cover non-exclusive inclusions. For example, a process, method, system, product, or terminal including a series of steps or units is not limited to the listed steps or units, but optionally further includes steps or units not listed, or optionally further includes other steps or units inherent to these processes, methods, products, or terminals.

Reference herein to an "example" means that a particular feature, structure, or characteristic described in connection with the example may be included in at least one example of the present disclosure. The presence of the phrase in various places in the specification does not necessarily refer to the same example, nor is it an independent or alternative example that is mutually exclusive from other examples. It is explicitly and implicitly understood by those skilled in the art that the examples described herein may be combined with other examples.

The present disclosure discloses an in-vehicle interaction method and system. According to the in-vehicle interaction method and system, when different users interact with an in-vehicle terminal by voice, a voice interaction interface can be displayed at different positions of a screen, thereby improving the visual experience and interactive experience of the users, and improving the interactive efficiency. Hereinafter, the method and the system will be described in detail, respectively.

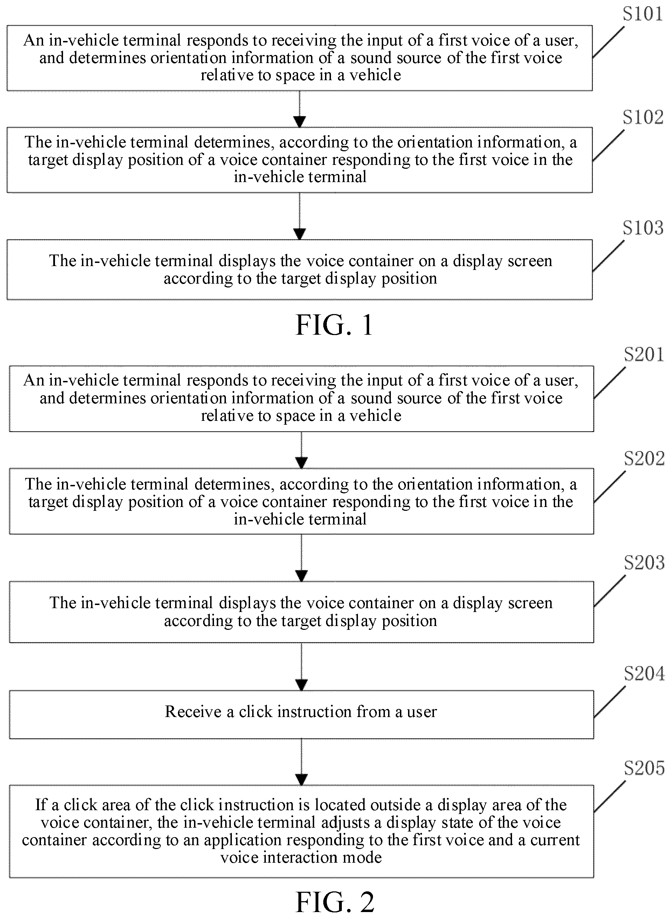

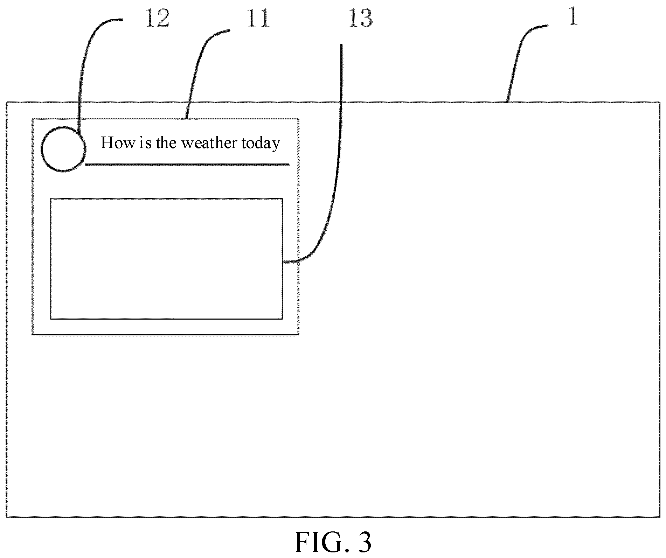

In an example, referring to FIG. 1 and FIG. 3, the present disclosure provides an in-vehicle interaction method. The in-vehicle interaction method is applied to an in-vehicle terminal. As shown in FIG. 1, the in-vehicle interaction method may include the following operations:
S101: The in-vehicle terminal responds to receiving the input of a first voice of a user, and determines orientation information of a sound source of the first voice relative to an in-vehicle space.

In the examples of the present disclosure, a voice acquisition device is installed in a vehicle, and may acquire voice information in the vehicle. When receiving a first voice of a user acquired by the voice acquisition device, the in-vehicle terminal may determine a direction and distance of a sound source relative to the voice acquisition device according to voice information of the first voice, and may further fit orientation information of the sound source relative to an in-vehicle space in combination with positions of seats in the vehicle and spatial distances between the seats. Based on settings of the seats in the vehicle, for example, when there are four seats, the orientation information may include a left front position, a right front position, a left rear position, and a right rear position. The examples of the present disclosure are not limited thereto. For example, when the user issues a voice instruction to the in-vehicle terminal close to a driver position, the in-vehicle terminal may determine that the orientation information of the user is the left front position in the vehicle.

S102: The in-vehicle terminal determines, according to the orientation information, a target display position of a voice container responding to the first voice in the in-vehicle terminal.

In the examples of the present disclosure, the voice container is a voice interaction interface. A display position of the voice container on the display screen of the in-vehicle terminal is determined by the in-vehicle terminal according to the orientation information obtained in step S101. As shown in FIG. 3, when the user issues a voice instruction "How is the weather today" and the in-vehicle terminal determines, according to a sound source of the voice instruction, that the orientation information of the sound source is the front left position, a voice container 11 containing the text content of the user instruction "How is the weather today" may be displayed on a display screen 1, and a target display position thereof is the upper left of the display screen. It should be noted that the target display position may include several display identifiers for characterizing the orientation information, and may be an upper left corner, an upper right corner, or a middle position. The examples of the present disclosure are not limited thereto.

S103: The in-vehicle terminal displays the voice container on a display screen according to the target display position.

As can be seen from the method described in the examples of the present disclosure, orientation information of a user in a vehicle is determined by sound source localization, a target display position of a voice interaction interface on a display screen is determined through the orientation information, and the voice interaction interface is displayed according to the target display position, thereby solving the problem that the voice interaction interface is displayed only at a preset fixed position. When users at different positions interact with an in-vehicle terminal by voice, the voice interaction interface can be displayed at different positions of a screen, thereby improving the visual experience and interactive experience of the users, and improving the interactive efficiency.

In an optional example, step S102 may include the following operations:
The in-vehicle terminal obtains a sound zone parameter of the vehicle. The sound zone parameter includes one or a combination of a left front sound zone, a right front sound zone, a left middle sound zone, a right middle sound zone, a left rear sound zone, and a right rear sound zone.

The in-vehicle terminal determines, according to the sound zone parameter, target sound zone information matched with the orientation information.

The in-vehicle terminal determines, according to the target sound zone information, the target display position of the voice container responding to the first voice in the in-vehicle terminal.

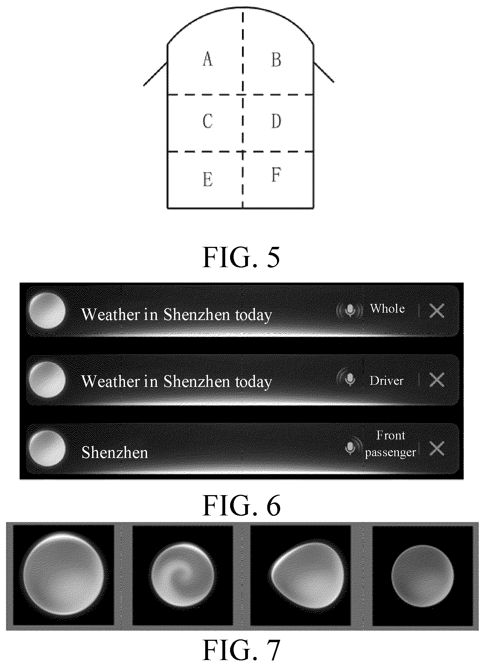

In the examples of the present disclosure, the vehicle may be divided into different sound zone parameters according to different distributions of the voice acquisition devices installed inside the vehicle. As shown in FIG. 5, the vehicle is divided into six sound zones, including a left front sound zone A, a right front sound zone B, a left middle sound zone C, a right middle sound zone D, a left rear sound zone E, and a right rear sound zone F. The in-vehicle terminal may determine, according to an actual sound zone parameter of the vehicle, target sound zone information matched with the orientation information of the sound source, and may further determine a target display position of the voice container.

For example, a vehicle includes only a left front sound zone A, a right front sound zone B, and another sound zone. At this moment, when a user issues a voice instruction to an in-vehicle terminal at a left rear seat position, the in-vehicle terminal may determine that orientation information of the user is a rear position in the vehicle, and may further determine that target sound zone information matched with the orientation information is another sound zone. The in-vehicle terminal may further determine that a target display position of a voice container in the in-vehicle terminal is a middle position according to the target sound zone information.

As can be seen from the method described in the examples of the present disclosure, an accurate sound zone position of a sound source can be determined according to a manner of matching a sound zone parameter of a vehicle with orientation information, thereby improving the accuracy of determining a target display position of a voice container. When users at different positions interact with an in-vehicle terminal by voice, a voice interaction interface can be displayed at different positions of a screen, thereby improving the visual experience and interactive experience of the users, and improving the interactive efficiency.

In this optional example, the operation that the in-vehicle terminal determines, according to the target sound zone information, the target display position of the voice container responding to the first voice in the in-vehicle terminal may include the following operations:

The in-vehicle terminal determines target display area information of the voice container on the display screen and color information corresponding to the target sound zone information and/or orientation text information corresponding to the target sound zone information according to a corresponding relationship between preset display area information and the target sound zone information.

The in-vehicle terminal determines the target display area information and the color information corresponding to the target sound zone information and/or the orientation text information corresponding to the target sound zone information as the target display position of the voice container.

In the examples of the present disclosure, the corresponding relationship between the preset display area information and the target sound zone information may be set to a one-to-one correspondence, or may be set to a many-to-one relationship. The examples of the present disclosure are not limited thereto. Exemplarily, the corresponding relationship between the preset display area information and the target sound zone information is: {preset display area, target sound zone information} = {(upper left corner, left front sound zone), (upper right corner, right front sound zone), (lower left corner, left rear sound zone), (lower right corner, right rear sound zone)}. Furthermore, the in-vehicle terminal may determine color information or text information corresponding to the target sound zone information according to the corresponding relationship. For example, when the target sound zone information is the left front sound zone or the right front sound zone, a corresponding area in the voice container is displayed in red. When the target sound zone information is the left front/rear sound zone or the right rear sound zone, a corresponding area in the voice container is displayed in green. As shown in FIG. 6, a vehicle includes only a left front sound zone A, a right front sound zone B, and another sound zone. When target sound zone information is the left front sound zone, "driver" is displayed in a corresponding area in a voice container. When the target sound zone information is the right front sound zone, "front passenger" is displayed in a corresponding area in the voice container. When the target sound zone information is another sound zone, "whole" is displayed in a corresponding area in the voice container.

As can be seen from the method described in the examples of the present disclosure, target display area information, color information, text information and the like of a voice container can be determined according to a corresponding relationship between preset display area information and target sound zone information, and the voice container can be more abundantly presented using multiple display identifiers characterizing orientation information. When users at different positions interact with an in-vehicle terminal by voice, different expression forms are shown, orientations of sound zones are clearly expressed to determine a driver wake-up state, a front passenger wake-up state or a whole-vehicle wake-up state, thereby improving the visual experience and interactive experience of the users.

In another optional example, after the in-vehicle terminal displays the voice container on a display screen according to the target display position, the method may further include the following operations:
The in-vehicle terminal responds to receiving the input of a second voice of the user, and determines whether orientation information corresponding to the second voice is consistent with the orientation information corresponding to the first voice.

If a determined result is negative, the in-vehicle terminal displays the voice container at a target display position matched with the orientation information corresponding to the second voice.

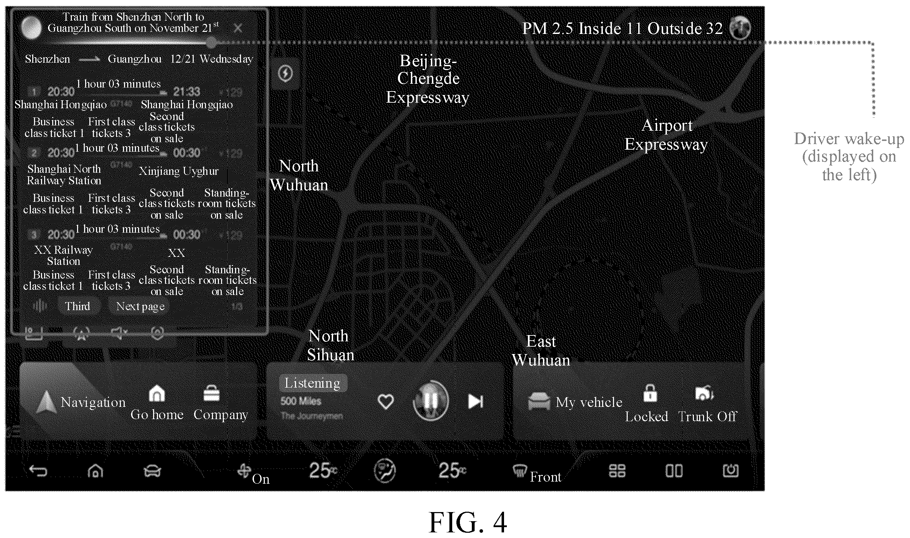

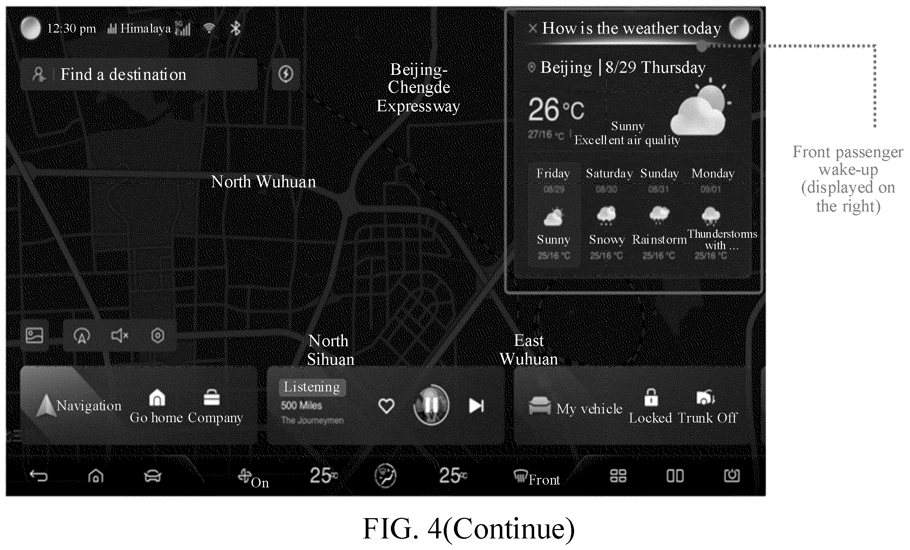

In the examples of the present disclosure, as shown in FIG. 4, when the in-vehicle terminal responds to the input of a first voice of a user at a driver position, the display position of the voice container on the display screen is upper left. When the input of a second voice of a user at a front passenger position is received, the in-vehicle terminal determines that orientation information corresponding to the two voices is inconsistent, and the in-vehicle terminal further adjusts the display position of the voice container to upper right. It should be noted that the display position of the voice container is adjusted regardless of whether the current voice interaction mode is a continuous dialog mode or not. The continuous dialog mode means that when a voice assistant responds to a voice instruction of a user and does not exit to a non-wake-up state, the user continues to issue a new voice instruction to the voice assistant. At this moment, the voice interaction mode is the continuous dialog mode. A non-continuous dialog mode means that the voice assistant responds to a voice instruction of a user and the user does not continue to issue a new voice instruction to the voice assistant. Before the voice assistant does not exit to a non-wake-up state, the voice interaction mode at this time is the non-continuous dialog mode.

As can be seen from the method described in the examples of the present disclosure, it is further determined whether a target display position of a voice container is adjusted by whether orientation information corresponding to input voices is consistent or not, and the target display position of the voice container can be adjusted in real time if the orientation information is inconsistent. When users at different positions interact with an in-vehicle terminal by voice, a voice interaction interface can be rapidly switched to different positions of a screen, thereby improving the visual experience and interactive experience of the users, and improving the interactive efficiency.

In still another optional example, before the in-vehicle terminal displays the voice container on a display screen according to the target display position, the method may further include the following operations:
The in-vehicle terminal determines whether an application running currently is a third-party application.

If the application is the third-party application, the in-vehicle terminal displays the voice container at a preset position of the display screen.

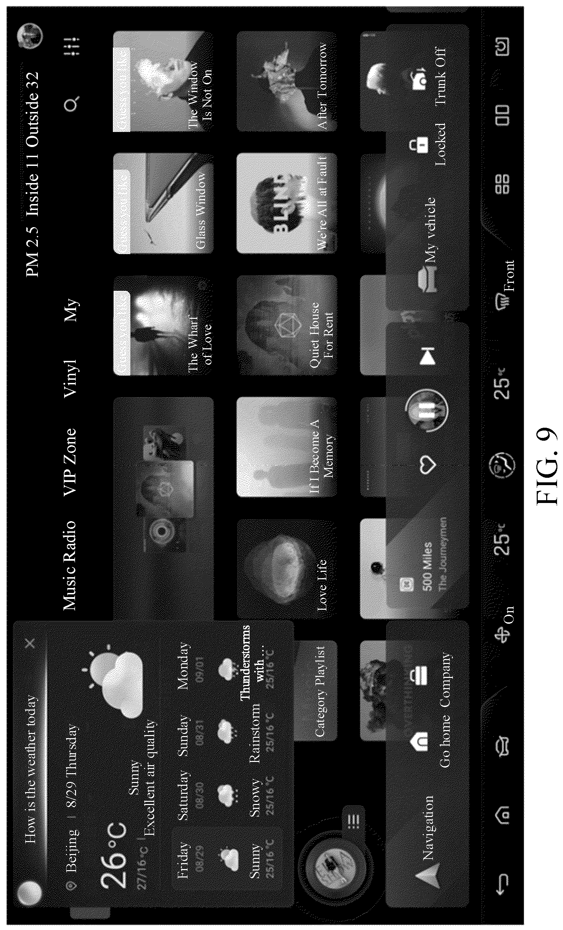

In the examples of the present disclosure, exemplarily, when an application running on a desktop is a navigation interface, regardless of whether the voice container is displayed at the upper left or upper right of the screen, the operation of the user on an interface of the desktop program will not be affected, while when the application running on the desktop is a third-party application such as a music playing application or a video playing application or a preset application, the display of the voice container at the upper right may affect the operation on the interface. As shown in a schematic diagram of a voice container being displayed in response to voice under a third-party application in FIG. 9, the in-vehicle terminal determines that the application currently running on the desktop is a third-party application, and the voice container is kept displayed at the upper left corner even if it is a voice instruction issued by a person at a front passenger position.

As can be seen from the method described in the examples of the present disclosure, a voice container is displayed on a display screen at a uniform position by determining whether an application running on a desktop is a third-party application, and the operation of a user on an interface of the third-party application is not affected, thus greatly improving the use experience of the user.

In still another optional example, the method may further include the following operations:
The in-vehicle terminal recognizes timbre information of the first voice.

The in-vehicle terminal determines a target display identifier corresponding to the timbre information according to a preset timbre display identifier.

The in-vehicle terminal displays the voice container in a display form corresponding to the target display identifier.

In the examples of the present disclosure, the in-vehicle terminal may also recognize timbre information of voice of a user, and further determine a target display identifier to be displayed in the voice container according to the timbre information, thus displaying the voice container on the display screen in a display form corresponding to the target display identifier. For example, the in-vehicle terminal distinguishes and recognizes timbre information of a girl or a child in a rear seat, and a rose voice bar corresponding to the voice of the girl or a yellow voice bar corresponding to the voice of the child is displayed in the voice container.

In an optional example, the in-vehicle terminal may dynamically display the voice bars with a light effect according to the frequency of the recognized sound and the level of the decibel.

As can be seen from the method described in the examples of the present disclosure, different features are distinguished by timbre, audio, decibel, and the like, and then displayed on a display screen through differentiated display identifiers, thereby improving the personalized experience of a user.

In still another example, as shown in FIG. 2, the present disclosure provides another in-vehicle interaction method. The in-vehicle interaction method may include the following operations:
S201: The in-vehicle terminal responds to receiving the input of a first voice of a user, and determines orientation information of a sound source of the first voice relative to an in-vehicle space.
S202: The in-vehicle terminal determines, according to the orientation information, a target display position of a voice container responding to the first voice in the in-vehicle terminal.
S203: The in-vehicle terminal displays the voice container on a display screen according to the target display position.

In the examples of the present disclosure, other descriptions of steps S201 to S203 are similar to the detailed descriptions of steps S101 to S103 in Example 1, respectively, and will not be repeated in the examples of the present disclosure.

S204: A click instruction is received from the user.

S205: If a click area of the click instruction is located outside a display area of the voice container, the in-vehicle terminal adjusts a display state of the voice container according to an application responding to the first voice and a current voice interaction mode.

In the examples of the present disclosure, as shown in FIG. 3, a voice container 11 includes a voice state assembly 12. The voice state assembly 12 is configured to present a current voice interaction state in the in-vehicle terminal. The voice interaction state includes a normal state, a listening state, a voice recognition state, and a broadcast state. The voice container 11 further includes a function card 13. The function card 13 is configured to present a voice interaction result in the in-vehicle terminal when the current voice interaction state is the broadcast state.

As shown in FIG. 7, the in-vehicle terminal may adjust a presentation form of the voice state assembly according to the current voice interaction state. The four presentation forms in the figure represent a normal state, a listening state, a voice recognition state, and a broadcast state, respectively. The normal state is a state where voice is not awake, and may be integrated with a system scene desktop in the form of light effects operating along a voice ball from sunrise to sunset, and a breathing state with the voice being displayed on a screen interface. The listening state is that a user inputs a relevant discourse instruction when voice is awake, and a voice form is a dynamic effect of listening with an ear, showing that the voice instruction of the user is being listened to. The voice recognition state is that the input voice of the user is being processed in real time to recognize the semantics thereof, where the voice form is dynamically in the shape of water drops. The broadcast state is that broadcasting is performed after a voice interaction result needs to be presented when the recognition of the voice instruction is completed, where the broadcasting is dynamically in a horn breathing state. It should be noted that a specific presentation form is not limited in the present disclosure and may be adjusted according to actual requirements.

In step S205, when the user touches a display area outside the voice container 11 on the display screen, the in-vehicle terminal adjusts the display state of the voice container according to the application responding to the voice and the current voice interaction mode. The display state of the voice container includes a display state of the voice state assembly and a display state of the function card. For example, when the user issues a voice instruction "Hello" to wake up a voice assistant, the voice state assembly is displayed on the display screen in the listening state. That is, the current voice interaction mode is a non-continuous mode, and the application responding to the voice has not yet existed. At this moment, when the user touches the display area outside the voice container 11 on the screen, the display state of the voice state assembly may be adjusted to the normal state (i.e., the state where voice is not awake).

As can be seen from the method described in the examples of the present disclosure, an adjustment operation on a display state of a voice container can be realized by combining a voice of a user and a touch operation of the user on a screen, thereby greatly facilitating an interactive operation between the user and an in-vehicle terminal, and improving the interactive experience and interactive efficiency of the user.

In an optional example, step S205 may include the following operations:
The in-vehicle terminal determines whether the application responding to the first voice is a preset application.

If the application is not the preset application, the in-vehicle terminal determines whether the current voice interaction mode is a continuous dialog mode.

If a determined result is positive, the in-vehicle terminal hides the function card, and adjusts the display state of the voice state assembly to a display form corresponding to the listening state.

If the determined result is negative, the in-vehicle terminal hides the function card, and adjusts the display state of the voice state assembly to a display form corresponding to the normal state.

In the examples of the present disclosure, the preset application may be an application having a higher display priority such as a navigation application. When the in-vehicle terminal determines that the application responding to the first voice does not belong to the preset application, the display state of the voice container is adjusted only according to whether the current voice interaction mode is the continuous dialog mode. In consideration of better embodying the humanized experience of voice interaction, in the examples of the present disclosure, when the current voice interaction mode is the continuous dialog mode, the voice state is adjusted to the listening state while hiding the function card, and the voice interaction function will not be exited at this moment. When the current voice interaction mode is not the continuous dialog mode, the voice state is adjusted to the normal state while hiding the function card. That is, the voice state is adjusted to the state where voice is not awake.

In this optional example, if the application is the preset application, the in-vehicle terminal maintains the display state of the function card, and maintains the display state of the voice state assembly into a display form corresponding to the broadcast state.

After the in-vehicle terminal maintains the display state of the voice state assembly into a display form corresponding to the broadcast state, the method further includes:
If the current voice interaction state is changed to the normal state, the in-vehicle terminal maintains the display state of the function card, and adjusts the display state of the voice state assembly to the display form corresponding to the normal state.

In the examples of the present disclosure, for example, when the application responding to the voice is a navigation application, regardless of whether the current voice interaction mode is the continuous dialog mode or not, the function card displays a navigation list. When a peripheral area of the list is clicked at this moment, the display state of the voice state assembly is still maintained into the display form corresponding to the broadcast state. After that, when the current voice interaction state is changed to the normal state due to timeout or the like, the in-vehicle terminal still maintains the display state of the function card and does not hide the function card.

As can be seen from the method described in the examples of the present disclosure, an adjustment operation on display states of a voice state assembly and a function card can be realized by combining a voice of a user and a touch operation of the user on a screen, thereby improving the humanized operation of voice interaction, greatly facilitating an interactive operation between the user and an in-vehicle terminal, and improving the interactive experience and interactive efficiency of the user.

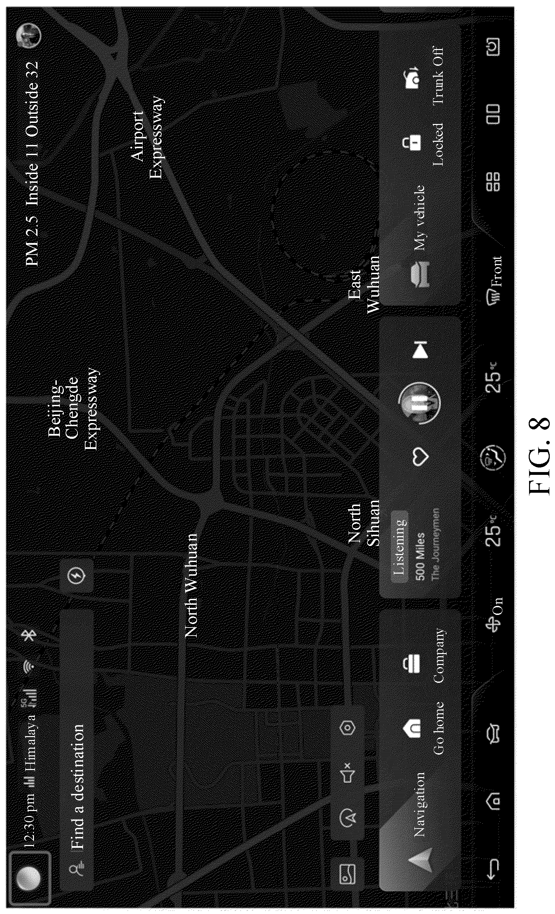

In another optional example, as shown in FIG. 8, the in-vehicle terminal controls the voice state assembly to be permanently displayed on the display screen. For example, as an entrance of smart voice, the voice state assembly is permanently displayed on the leftmost side of a status bar on the display screen. Since the status bar will not be easily automatically hidden during application use, it can ensure that the smart voice is permanently displayed under any interface, and the penetration rate of voice functions and the smart full-scene interactive experience of a cabin are improved, thereby making the interface display uniform and regular.

It should be understood that the sequence number of the steps in the above examples does not mean the sequence of execution, the sequence of execution of each process should be determined by functions and internal logic, and any limitation should not be constituted on the implementation process of the examples of the present disclosure.

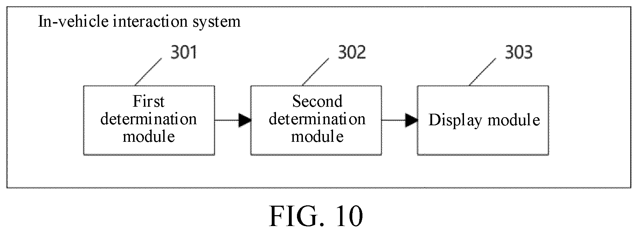

In still another example, as shown in FIG. 10, the present disclosure provides an in-vehicle interaction system. The system is applied to an in-vehicle terminal, and may include:
a first determination module 301, configured to respond to receiving the input of a first voice of a user, and determine orientation information of a sound source of the first voice relative to an in-vehicle space;
a second determination module 302, configured to determine, according to the orientation information, a target display position of a voice container responding to the first voice in the in-vehicle terminal; and
a display module 303, configured to display the voice container on a display screen according to the target display position.

As can be seen from the system described in the examples of the present disclosure, orientation information of a user in a vehicle is determined by sound source localization, a target display position of a voice interaction interface on a display screen is determined through the orientation information, and the voice interaction interface is displayed according to the target display position, thereby solving the problem that the voice interaction interface is displayed only at a preset fixed position. When users at different positions interact with an in-vehicle terminal by voice, the voice interaction interface can be displayed at different positions of a screen, thereby improving the visual experience and interactive experience of the users, and improving the interactive efficiency.

The present disclosure also provides a controller for performing the in-vehicle interaction method. Specific limitations on the controller may be similar to the limitations on the in-vehicle interaction method, and will not be described in detail herein. The various modules in the controller may be implemented in whole or in part by software, hardware, and combinations thereof. The various modules may be embedded in hardware or separate from a processor in a computer device, or may be stored in software in a memory in the computer device, so that the processor calls operations corresponding to the above modules.

The present disclosure also provides a vehicle, including the controller.

The present disclosure also provides a vehicle, including the in-vehicle interaction system.

The present disclosure also provides a computer storage medium. The computer storage medium stores computer instructions that, when executed by a processor, implement the in-vehicle interaction method according to the above method examples.

The above-described examples are merely intended to illustrate the technical solutions of the present disclosure, and are not intended to limit the technical solutions thereof. Although the present disclosure has been described in detail with reference to the foregoing examples, those of ordinary skill in the art should understand that the technical solutions described in the foregoing examples can still be modified, or some technical features can be equivalently replaced. However, these modifications or replacements do not cause the essence of the corresponding technical solutions to deviate from the spirit and scope of the technical solutions of each example of the present disclosure, and should be included within the scope of protection of the present disclosure.

## Claims

1. An in-vehicle interaction method, applied to an in-vehicle terminal, the method comprising:
responding to an input of a first voice of a user, and determining orientation information of a sound source of the first voice relative to an in-vehicle space;
determining, according to the orientation information, a target display position of a voice container responding to the first voice in the in-vehicle terminal; and
displaying the voice container on a display screen according to the target display position.

2. The in-vehicle interaction method according to claim 1, wherein determining, according to the orientation information, the target display position of the voice container responding to the first voice in the in-vehicle terminal comprises:
obtaining a sound zone parameter of a vehicle, the sound zone parameter comprising one or a combination of a left front sound zone, a right front sound zone, a left middle sound zone, a right middle sound zone, a left rear sound zone, and a right rear sound zone;
determining, according to the sound zone parameter, target sound zone information matched with the orientation information; and
determining, according to the target sound zone information, the target display position of the voice container responding to the first voice in the in-vehicle terminal.

3. The in-vehicle interaction method according to claim 2, wherein determining, according to the target sound zone information, the target display position of the voice container responding to the first voice in the in-vehicle terminal comprises:
determining target display area information of the voice container on the display screen and color information corresponding to the target sound zone information and/or orientation text information corresponding to the target sound zone information according to a corresponding relationship between preset display area information and the target sound zone information; and
determining the target display area information and the color information corresponding to the target sound zone information and/or the orientation text information corresponding to the target sound zone information as the target display position of the voice container.

4. The in-vehicle interaction method according to any one of claims 1 to 3, after displaying the voice container on the display screen according to the target display position, the method further comprising:
responding to an input of a second voice of the user, and determining whether orientation information corresponding to the second voice is consistent with the orientation information corresponding to the first voice; and
if a determined result is negative, displaying the voice container at a target display position matched with the orientation information corresponding to the second voice.

5. The in-vehicle interaction method according to any one of claims 1 to 4, wherein the voice container comprises a voice state assembly, and the voice state assembly is configured to present a current voice interaction state in the in-vehicle terminal, the voice interaction state comprising a normal state, a listening state, a voice recognition state, and a broadcast state; and
the voice container further comprises a function card, and the function card is configured to present a voice interaction result in the in-vehicle terminal when the current voice interaction state is the broadcast state.

6. The in-vehicle interaction method according to claim 5, after displaying the voice container on the display screen according to the target display position, the method further comprising:
receiving a click instruction from the user; and
if a click area of the click instruction is located outside a display area of the voice container, adjusting a display state of the voice container according to an application responding to the first voice and a current voice interaction mode, wherein the display state of the voice container comprises a display state of the voice state assembly and a display state of the function card.

7. The in-vehicle interaction method according to claim 6, wherein adjusting the display state of the voice container according to the application responding to the first voice and the current voice interaction mode comprises:
determining whether the application responding to the first voice is a preset application;
if the application is not the preset application, determining whether the current voice interaction mode is a continuous dialog mode;
if a determined result is positive, hiding the function card, and adjusting the display state of the voice state assembly to a display form corresponding to the listening state; and
if the determined result is negative, hiding the function card, and adjusting the display state of the voice state assembly to a display form corresponding to the normal state.

8. The in-vehicle interaction method according to claim 7, further comprising:
if the application is the preset application, maintaining the display state of the function card, and maintaining the display state of the voice state assembly into a display form corresponding to the broadcast state;
after maintaining the display state of the voice state assembly into the display form corresponding to the broadcast state, the method further comprising:
if the current voice interaction state is changed to the normal state, maintaining the display state of the function card, and adjusting the display state of the voice state assembly to the display form corresponding to the normal state.

9. The in-vehicle interaction method according to any one of claims 1 to 8, before displaying the voice container on the display screen according to the target display position, the method further comprising:
determining whether an application running currently is a third-party application; and
if a determined result is positive, displaying the voice container at a preset position of the display screen.

10. The in-vehicle interaction method according to any one of claims 5 to 8, further comprising:
adjusting a presentation form of the voice state assembly according to the current voice interaction state,
wherein adjusting the presentation form of the voice state assembly according to the current voice interaction state comprises:
controlling the voice state assembly to present a presentation form corresponding to the normal state if the current voice interaction state is a non-wake-up state;
controlling the voice state assembly to present a presentation form corresponding to the listening state if the current voice interaction state is a wake-up state;
controlling the voice state assembly to present a presentation form corresponding to the voice recognition state if the current voice interaction state is at recognition of a discourse instruction; and
controlling the voice state assembly to present a presentation form corresponding to the broadcast state if a voice interaction result needs to be presented after the recognition of the discourse instruction is completed.

11. The in-vehicle interaction method according to claim 10, further comprising:
controlling the voice state assembly to be permanently displayed on the display screen.

12. The in-vehicle interaction method according to any one of claims 1 to 11, further comprising:
recognizing timbre information of the first voice;
determining a target display identifier corresponding to the timbre information according to a preset timbre display identifier; and
displaying the voice container in a display form corresponding to the target display identifier.

13. An in-vehicle interaction system, applied to an in-vehicle terminal, the system comprising:
a first determination module, configured to respond to receiving the input of a first voice of a user, and determine orientation information of a sound source of the first voice relative to an in-vehicle space;
a second determination module, configured to determine, according to the orientation information, a target display position of a voice container responding to the first voice in the in-vehicle terminal; and
a display module, configured to display the voice container on a display screen according to the target display position.

14. A controller for performing the in-vehicle interaction method according to any one of claims 1 to 12.

15. A computer storage medium storing computer instructions that, when called, are configured for performing the in-vehicle interaction method according to any one of claims 1 to 12.

16. A vehicle comprising the in-vehicle interaction system according to claim 13 or the controller according to claim 14.
